# EUROPEAN PATENT SPECIFICATION

(11) **EP 3 211 766 B1**
(45) Date of publication and mention of the grant of the patent: **27.03.2019**
(21) Application number: 17158240.6
(22) Date of filing: 27.02.2017
(51) Int. Cl.: H02K 5/00, F01D 15/10, F01D 25/28, H02K 15/00, F16M 1/00, H02K 5/26, F16M 7/00, F16M 9/00, H02K 15/02

(54) **ELECTRIC GENERATOR, FOUNDATION PEDESTAL FOR ELECTRIC GENERATOR AND MAINTENANCE METHOD FOR ELECTRIC GENERATOR**
ELEKTRISCHER GENERATOR, FUNDAMENTSOCKEL FÜR EINEN ELEKTRISCHEN GENERATOR UND WARTUNGSVERFAHREN FÜR EINEN ELEKTRISCHEN GENERATOR
GÉNÉRATEUR ÉLECTRIQUE, SOCLE DE FONDATION POUR GÉNÉRATEUR ÉLECTRIQUE ET PROCÉDÉ DE MAINTENANCE DE GÉNÉRATEUR ÉLECTRIQUE

(30) Priority: 29.02.2016 JP 2016037702
(43) Date of publication of application: 30.08.2017
(73) Proprietor: Kabushiki Kaisha Toshiba, Tokyo 105-8001 (JP)
(72) Inventor: ARAI, Kento, Tokyo, 105-8001 (JP); NAKAMURA, Hideyuki, Tokyo, 105-8001 (JP); MIYAIKE, Kiyoshi, Tokyo, 105-8001 (JP); GUNJI, Yuichiro, Tokyo, 105-8001 (JP); NAKAYAMA, Shinya, Tokyo, 105-8001 (JP); KIKUCHI, Toru, Tokyo, 105-8001 (JP); SATO, Kazuki, Tokyo, 105-8001 (JP)
(74) Representative: Moreland, David

(56) References cited:
- WO-A1-2015/064208
- JP-A- S58 163 246
- US-A- 5 609 018
- US-A1- 2005 150 095
- US-A1- 2012 228 974
- Anonymous: "Utilities - Air Caster", AIr Caster Corporation , 25 January 2016 (2016-01-25), XP055391142, Retrieved from the Internet: URL:https://web.archive.org/web/2016012520 1910/http://www.aircaster.com/applications /utilities/ [retrieved on 2017-07-14]

## Description

Embodiments described herein relate generally to an electric generator for a power plant, a foundation pedestal for a power plant electric generator, and a maintenance method for an electric generator applied to a power plant.

Single-shaft type combined cycle power plants which drive a single electric generator by a gas turbine and a steam turbine include a form in which the gas turbine and the steam turbine are connected via a single shaft with the electric generator located therebetween.

For the maintenance of an electric generator, a rotor is pulled out of a stator of the electric generator, and the rotor and the stator undergo internal inspection and repair. At this time, a space for pulling out the rotor in the axial direction is required on one axial end side of the electric generator. However, for the electric generator connected with engines at its both ends as above, a space for pulling out the rotor cannot be obtained due to the presence of the engines at both of its ends. As such, there is a drawback that one of the engines, i.e., the gas turbine or the steam turbine, must be disassembled at the time of the maintenance of the electric generator.

Relating to the maintenance of an electric generator connected with engines at both of its axial ends, a method that does not require disassembly of the engines (hereinafter called a "first method") is known. According to this first method, a temporary work floor is constructed above either engine, the electric generator is lifted up by a portal crane, and the rotor of the electric generator is pulled out onto the temporary work floor to conduct inspection of the electric generator.

Also, relating to the maintenance of an electric generator connected with engines at both of its axial ends, another method that does not require disassembly of the engines (hereinafter called a "second method") is known. According to this second method, a platform is provided above the steam turbine, then the electric generator is lifted up to the level of the platform by a temporary gantry crane, etc., then the electric generator is placed on a temporary support column, and the rotor is pulled out onto the platform to conduct inspection of the electric generator.

Also, relating to the maintenance of an electric generator connected with engines at both of its axial ends, a further method that does not require disassembly of the engines (hereinafter called a "third method") is known. According to this third method, the electric generator is raised with a jack to form a gap between it and a foundation pedestal, the foundation for the electric generator is provided with a temporary rail in an axially perpendicular direction, a wheeled dolly to run on the rail is placed at the lower portion of the electric generator, the electric generator is laterally moved to the position where pulling of the rotor of the electric generator does not interfere with the engine, and thereafter the rotor is pulled out to conduct the maintenance of the electric generator.

The first method and the second method involve many auxiliary operations for the maintenance of an electric generator, such as installation of a temporary work floor (platform) and a temporary crane, and as such, they incur additional costs and work time and also create a problem of safety due to high uplift of the electric generator. Furthermore, providing the temporary work floor (platform) above the steam turbine leads to a problem of posing limitations on the maintenance of the steam turbine.

Also, the third method involves many auxiliary operations for the axially perpendicular movement of the electric generator, such as jacking up the electric generator, installation of the temporary rail and attachment of the wheeled dolly, and as such, it incurs additional costs and work time and also creates a problem of increasing items to be checked for safety relating to, for example, strength of the temporary rail onto which a load is concentrated.

US 2012228974 describes a generator support system for a centerline mounted generator which includes a generator support member configured and disposed to support a generator upon a support surface; separate means for lifting and horizontally moving the generator are inserted under the generator supporting leg plates.

US 2005/0150095 and Wo 2015/064208 describe similar generators wherein separate means for lifting and horizontally moving the generator are inserted under the generator bottom portion.

In view of the foregoing, techniques that allow safe maintenance operations while reducing the maintenance costs and work time for an electric generator are desired.

In general, according to one embodiment, there is provided a maintenance method for an electric generator applied to a power plant in which both axial ends of the electric generator are connected to respective rotary machines, and providing the electric generator with leg plates for placing the electric generator on a floor face of a foundation pedestal. The maintenance method includes: a bottom portion of the electric generator to have a bottom plane capable of supporting a weight of the electric generator, and forming a gap between the bottom plane of the electric generator and an opposing floor face of the foundation pedestal such that a carrier device capable of lifting up and horizontally moving the electric generator can be inserted into the gap while the electric generator is placed on the floor face of the foundation pedestal via the leg plates; and providing the carrier device in the gap, lifting up and horizontally moving the electric generator by the carrier device, and thereafter doing maintenance of the electric generator.

The invention can be more fully understood from the following detailed description when taken in conjunction with the accompanying drawings, in which:
FIG. 1 is a side view showing a shafting structure of a single-shaft type combined cycle power plant (combined-cycle power plant) adopting an electric generator driven at both ends according to one embodiment;
FIG. 2 is a side view showing a structure of the electric generator according to the same embodiment;
FIG. 3 is a bottom view showing one example of a bottom structure of the electric generator in the same embodiment;
FIG. 4 is a bottom view showing another example of the bottom structure of the electric generator in the same embodiment;
FIG. 5 is a bottom view showing another example of the bottom structure of the electric generator in the same embodiment;
FIG. 6 is a side view for description of one example of a maintenance method for the electric generator according to the same embodiment;
FIG. 7A and FIG. 7B are a side view and a bottom view showing a structure of a carrier device used in the same embodiment (where carriers of an air float type are adopted);
FIG. 8 is a sectional view for description of an operation principle of the air float-type carriers used in the same embodiment;
FIG. 9 is a top view for description of one example of the maintenance method for the electric generator according to the same embodiment;
FIG. 10 is a front view for description of one example of the maintenance method for the electric generator according to the same embodiment;
FIG. 11 is a front view for description of another example of the maintenance method for the electric generator according to the same embodiment;
FIG. 12 is a sectional view showing one example of a structure of a carrier device guide used in the same embodiment;
FIG. 13A and FIG. 13B are a side view and a top view showing a modification example of a structure of a foundation pedestal according to the same embodiment;
FIG. 14A and FIG. 14B are a side view and a top view showing a modification example of the structure of the electric generator according to the same embodiment;
FIG. 15 is a side view for description of a modification example of the maintenance method for the electric generator according to the same embodiment;
FIG. 16 is a side view showing a modification example of the carrier device (carrier device of the combination of an air-pressure or water-pressure or oil-pressure lift-up mechanism and a dolly with rollers) used in the same embodiment;
FIG. 17 is a side view showing another modification example of the carrier device (carrier device of the combination of an air-pressure or water-pressure or oil-pressure lift-up mechanism and rollers) used in the same embodiment; and
FIG. 18 is a top view showing another modification example of the maintenance method for the electric generator according to the same embodiment.

Hereinafter, embodiments will be described with reference to the drawings.

First, a shafting structure of a plant including an electric generator as an inspection target will be described.

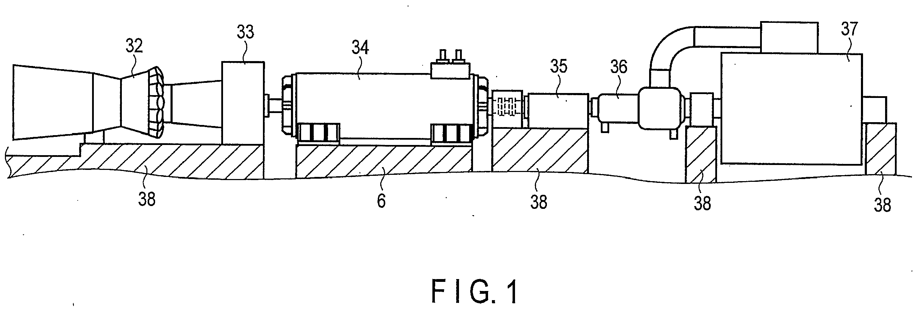

FIG. 1 is a side view showing the shafting structure of a single-shaft type combined cycle power plant (combined-cycle power plant) adopting an electric generator driven at both ends according to one embodiment.

This plant is a combined-cycle power plant which drives an electric generator by a gas turbine and a steam turbine, wherein a gas turbine 32, and a medium-to-high pressure steam turbine 36 and a low pressure steam turbine 37 are disposed at the respective ends of an electric generator 34, connected to each other via an intermediate shaft 33, a clutch 35, or the like, and linearly arranged on one axis as shown in FIG. 1. Also, the gas turbine 32, the medium-to-high pressure steam turbine 36, the low pressure steam turbine 37, and the electric generator 34 are each installed on foundation pedestals 38 and 6 made of, for example, reinforced concrete, as shown in FIG. 1.

Note that, in the following descriptions, the direction that is perpendicular and horizontal to the rotational axis of the electric generator will be called a "lateral direction".

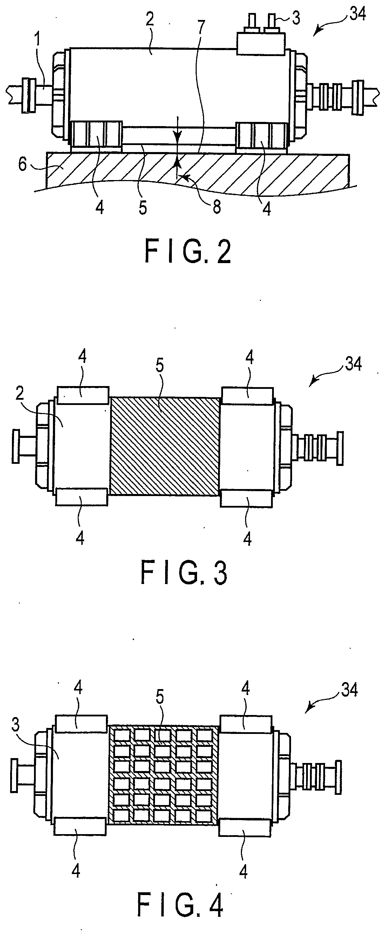

FIG. 2 shows the structure of the electric generator according to this embodiment.

Generally, there are various forms for an electric generator to take, regarding the extracting direction of a terminal for extracting generated electric power, the arrangement of a cooler, the distance (center height) from the level of a foundation pedestal for installation of leg plates to the center of the axis of a rotor, and so on. In this embodiment, since the electric generator 34 is moved in the lateral direction only with a slight uplift, it is a prerequisite to have a structure that does not cause the main structure of the electric generator 34, such as a terminal 3, a cooler, and a frame, to interfere with the foundation pedestal during the movement in the lateral direction. FIG. 2 is drawn as one example of the electric generator 34 that satisfies such a prerequisite, and the extracting direction of the terminal 3 is the area above the electric generator.

The electric generator 34 is placed on the foundation pedestal 6 using leg plates 4 arranged at four corners, and secured by means of foundation bolts and key structures (omitted in the figures). A bottom plane 5 of the electric generator 34, which is surrounded by the leg plates 4 at the four corners of the electric generator 34, is at a position higher than the bottom face of the leg plates 4 and forms a gap 8 between it and a floor face 7 of the foundation pedestal when the electric generator 34 is viewed from the lateral direction.

FIGS. 3 to 5 show examples of the bottom plane 5 of the electric generator 34 when viewed from below.

The bottom plane 5 of the electric generator is for evenly transferring the electric generator's own weight to a carrier device (described later). Thus, as shown by hatched lines in FIGS. 3 to 5, the bottom plane 5 may be formed with a flat plate structure or as non-continuous structural faces in a grid pattern or a shelf plate pattern.

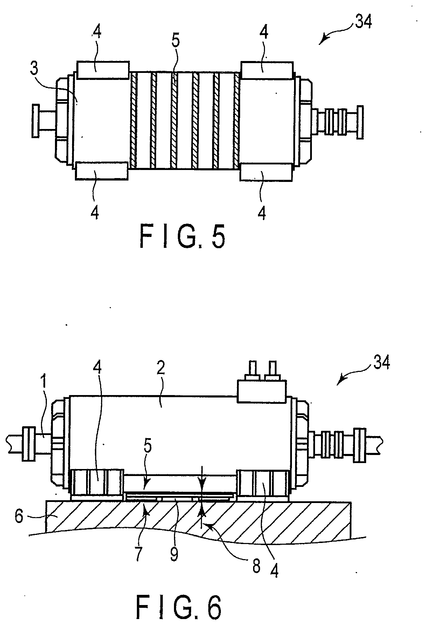

When conducting maintenance with such structures, a carrier device 9 is inserted from the side into the gap 8 formed between the bottom plane 5 of the electric generator and the floor face 7 of the foundation pedestal as shown in FIG. 6. The carrier device 9 is a device capable of lifting up and horizontally moving the electric generator 34. The carrier device 9 shown in FIG. 6 is an example of the carrier device in which carriers of an air float type are adopted.

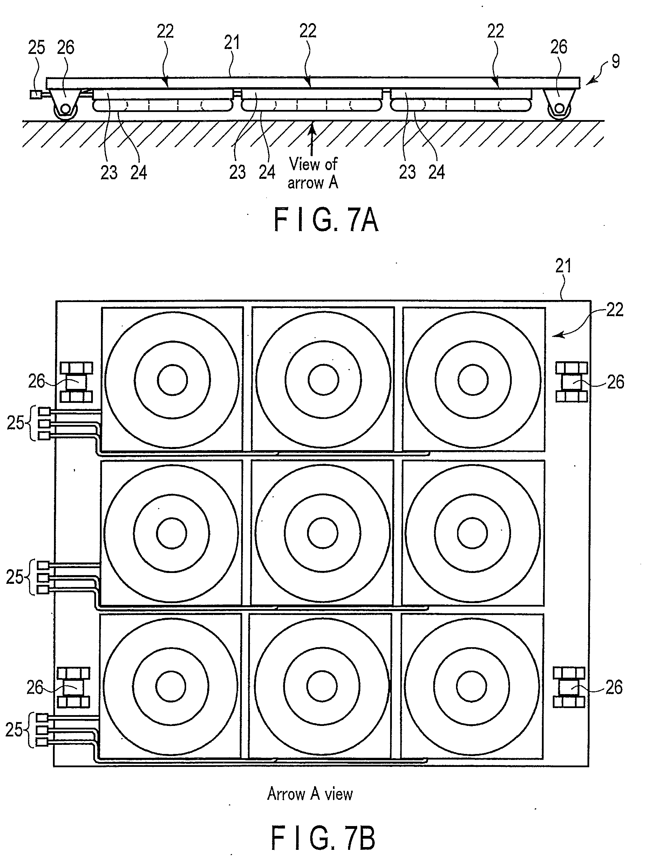

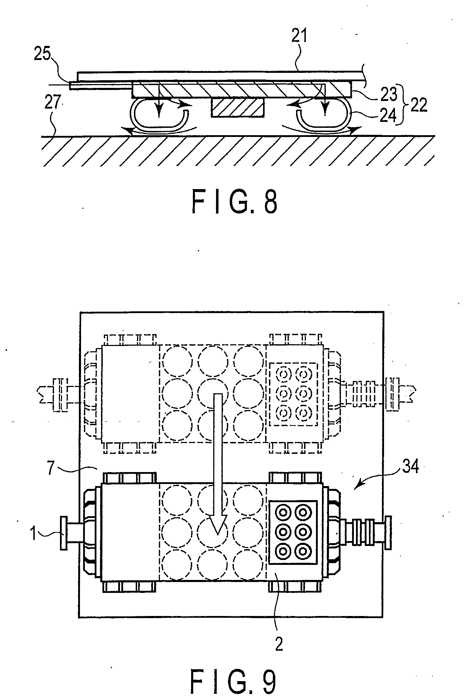

FIG. 7A and FIG. 7B show one example of the carrier device adopting air float-type carriers. FIG. 7A is a side view and FIG. 7B is a bottom view (view seen from the direction of arrow A that is in the middle of FIG. 7A). Also, FIG. 8 shows an operation principle of the air float-type carriers. Note that the arrows in FIG. 8 represent flows of compressed air.

The carrier device 9 shown in FIG. 6 has a structure in which a plurality of air float-type carriers 22 are fixed under a load-receiving plate 21 as shown in FIG. 7A and FIG. 7B, and which includes casters 26 that contact the ground during the non-actuation of compressed air.

The air float-type carrier 22 includes mainly a base 23 and a bag 24, and lifts up the load loaded upon base 23 using the air pressure in the bag created by supplying compressed air from an air supply port 25 to the inside of the bag 24. At this time, a thin film of air is formed between the bag 24 and a floor face 27, providing an advantage that a frictional force during the carriage is very small. There is also an advantage that the height of the carrier device 9 can be lowered.

The gap 8 formed between the bottom plane 5 of the electric generator and the floor face 7 of the foundation pedestal is larger than the height of the carrier device 9 during the non-actuation of compressed air by the carrier device 9. This allows easy insertion of the carrier device 9 into the gap 8 by means of the casters 26 attached to the carrier device 9, without an operation of jacking up the electric generator 34.

Note that both ends of the rotor axis of the electric generator 34 should be disconnected from other rotor axes in advance, and structural elements of the electric generator should be disconnected from structural elements of the foundation in advance. Also, the pipe arrangement of the electric generator, structural elements of the foundation, etc., that would interfere with the electric generator 34 at the lateral movement should be disassembled.

Additionally, the piping of the electric generator should be formed into a structure that can be easily disassembled in order to avoid interference with the lateral movement; for example, a flange connection at the same level of the floor face 7 of the foundation pedestal may be adopted, or a flanged short pipe may be provided at the level of the floor face 7 of the foundation pedestal. For also the structural elements of the foundation, such as a foundation bolt, a stud structure protruding upward beyond the floor face 7 of the foundation pedestal should be eliminated and a foundation bolt having a tap on the side of the foundation pedestal 6 and being screwed from above the leg plates 4 may be adopted, and the members that would interfere with the electric generator 34 during the lateral movement, such as an excitation bus bar standing from below the foundation pedestal 6, should be formed into a structure that can be easily disassembled.

Next, air pressure is actuated for the carrier device 9 to lift up the electric generator 34 and to bring the leg plates 4 into a state of floating above the foundation pedestal 6.

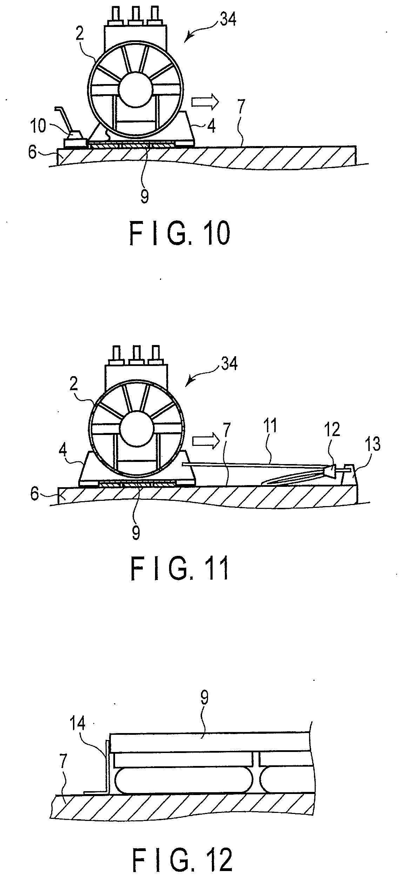

Thereafter, the electric generator 34 is moved in the lateral direction over the floor face 7 of the foundation pedestal by the carrier device 9 as shown in FIG. 9. Two examples of the method for the lateral movement of the electric generator 34 are shown in FIG. 10 and FIG. 11. FIG. 10 shows an example in which a carrier drive device 10 associated with the carrier device 9 is adopted. FIG. 11 shows an example in which a chain block 12 and wire 11 are adopted between the electric generator 34 and an anchor 13 of the foundation pedestal, as the motive power for the lateral movement. Other methods such as one using a winch or a crane may also be taken.

At the lateral movement, providing a movement guide 14 for the carrier device as shown in FIG. 12 or a stopper would improve the workability and safety. This movement guide 14 or stopper may be provided on the floor face of the foundation pedestal on a permanent basis, or provided only for the work time by means of fastening, etc.

After the lateral movement to the position where a rotor 1 can be pulled out without interfering with other equipment, the electric generator 34 is lowered by discharging the air pressure of the carrier device 9 and is placed on the foundation pedestal 6 via the leg plates 4. At this position, disassembly of the electric generator 34 and maintenance operations including taking out the rotor are conducted.

The respective steps of the maintenance operations of the electric generator 34 described above are summarized as follows:
- An axis disconnection step to disconnect the rotary machines at the respective axial ends of the electric generator 34;
- A foundation disconnection step to disconnect the foundation pedestal 6 for the electric generator 34 from the leg plates 4;
- A disassembly step to disassemble, on the side of the electric generator 34 and the side of the foundation pedestal 6, structural elements that would cause interference between the electric generator 34 and the foundation pedestal 6 during the axially perpendicular movement of the electric generator 34;
- A carrier device insertion step to insert the carrier device 9 into the gap 8;
- A carriage step to lift up the electric generator 34 by the actuation of the carrier device 9 and laterally move the electric generator 34 over the floor face 7 of the foundation pedestal to a predetermined position; and
- An electric generator placement step to place the electric generator 34 at the predetermined position on the foundation pedestal 6 via the leg plates 4.

After completing the maintenance operations for the electric generator 34, the electric generator 34 can be returned to its original position by carrying out the respective steps described as the pre-maintenance steps above in a reverse manner. In this instance, the pressure for the carrier device 9 is actuated again for the uplift and the lateral movement of the electric generator 34. After the electric generator 34 is returned to the given installation position, the pressure of the carrier device 9 is discharged, and the electric generator 34 is installed at the given position on the foundation pedestal 6 via the leg plates 4 and connected to the rotary machines at the respective axial ends.

For this re-installation of the electric generator 34, alignment between the rotor axes to be connected and the respective ends of the electric generator 34 needs to be adjusted. In this task, vertical adjustment is performed by varying the thickness of shims inserted under the leg plates 4, and the horizontal position of the electric generator 34 is finely adjusted. In any case, however, jacking up the electric generator 34 would be required. In the embodiment, the uplift function of the carrier device 9 may also be utilized for this work, and thus, the electric generator 34 can be installed while performing the alignment adjustment without a changeover after the lateral movement of the electric generator 34. In other words, the carrier device 9 itself can be utilized as a jacking device for the electric generator 34 for the alignment adjustment task, so the necessity of setting up a new jacking device can be eliminated and the efficiency in re-installation operations can be achieved.

According to this embodiment as above, preparation for the movement of the electric generator is completed only by inserting the carrier device 9 into the gap 8 formed between the electric generator 34 and the foundation pedestal 6, without lifting up (jacking up) the electric generator 34, and the electric generator 34 can be easily moved. Since a temporary crane or a work cradle for lifting up the electric generator 34, or installation work for the temporary equipment for the lateral movement of the electric generator 34 is not required, the maintenance costs and work time can be reduced. Moreover, with the smaller amount of uplift of the electric generator 34, operational safety is improved, too. Also, the weight of the electric generator 34 during carriage is received over a wide area of the floor face 7 of the foundation pedestal, so the load on the foundation pedestal 6 can be mitigated, also contributing to the reduction in basic costs during the construction.

### [Modification example 1]

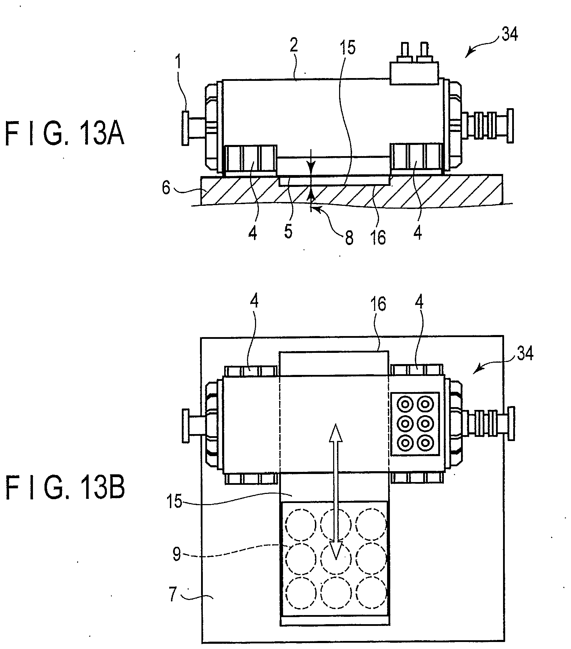

Next, a modification example 1 of the above embodiment will be described with reference to FIG. 13A and FIG. 13B.

FIG. 13A and FIG. 13B are a side view and a top view mainly showing the modification example of the structure of the foundation pedestal 6.

In the embodiment described above, the gap 8 between the bottom plane 5 of the electric generator and the floor face 7 of the foundation pedestal is provided by forming the bottom plane 5 of the electric generator to be higher than the bottom face of the leg plates 4. In contrast, in the modification example 1 shown in FIG. 13A and FIG. 13B, the gap 8 is provided by forming a floor face 15 of the foundation pedestal, located at the corresponding portion, to be lower than the floor face 7 of the foundation pedestal where the leg plates 4 are placed. That is, the floor face of the foundation pedestal at the position facing the bottom plane 5 of the electric generator is made lower than the floor face of the foundation pedestal for the placement of the leg plates 4.

Also, this low floor face 15 of the foundation pedestal is formed as the underside of a groove 16 having a width in the axial direction of the electric generator which is equal to or greater than the width of the carrier device 9, and having a length in the axially perpendicular direction of the electric generator which assumes the movement range of the electric generator 34 and the size, etc., of a drive mechanism associated with the carrier device.

When conducting maintenance with such a structure, the carrier device 9 is positioned within the groove 16 and inserted below the bottom plane 5 of the electric generator 34, and then the electric generator 34 is lifted up and moved in the lateral direction to a predetermined position by the carrier device 9 in the groove 16.

According to this modification example, the height of the center of the rotational axis of the electric generator 34 from the floor face 7 of the foundation pedestal (so-called center height) can be made lower than in the above-described embodiment by the amount of the gap. Also, since the side faces of the groove 16 may serve as a movement guide or a stopper for the movement of the carrier device, the need to provide a separate movement guide or stopper can be eliminated. Together, as the movement face for the carrier device is defined, there is also an advantage that a smooth floor face required for the carrier device can be easily formed and maintained.

### [Modification example 2]

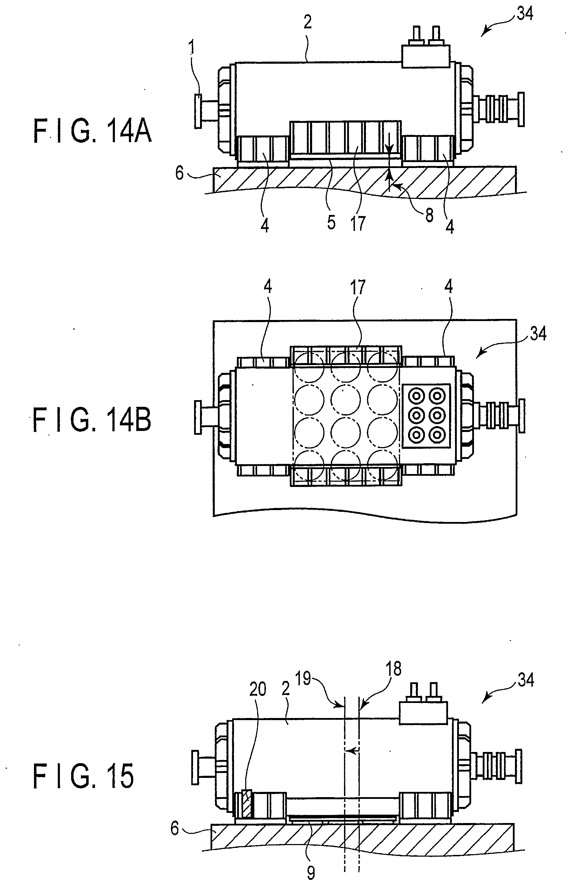

Next, a modification example 2 of the above embodiment will be described with reference to FIG. 14A and FIG. 14B.

FIG. 14A and FIG. 14B are a side view and a top view mainly showing the modification example of the structure of the electric generator 34.

In the first embodiment described above, the load capacity of the carrier device 9 depends on the surface area of the bottom plane 5 of the electric generator, so if the electric generator has a large weight for the surface area of the bottom plane 5 of the electric generator, the carrier device 9 would lack a sufficient load capacity. In such an instance, a load-receiving extension rack 17 for extending the area of the bottom plane 5 of the electric generator in the axially perpendicular direction of the electric generator (constituting a plane flush with the bottom plane 5 of the electric generator) is added to the side face of the stator 2 of the electric generator, as shown in FIG. 14A and FIG. 14B.

The load-receiving extension rack 17 may be formed integrally with the stator 2 of the electric generator or as a separate member attached by means of fastening, etc., to the stator 2 of the electric generator.

According to this modification example, providing the load-receiving extension rack 17 can suitably extend the area of the bottom plane 5 of the electric generator. Therefore, the load restriction of the carrier device 9 can be eliminated and the design margin of the carrier device can be increased. Together, the weight of the applicable electric generator 34 can be increased.

### [Modification example 3]

Next, a modification example 3 of the above embodiment will be described with reference to FIG. 15.

FIG. 15 is a side view showing the modification example of the maintenance method for the electric generator 34.

In the first embodiment described above, when the electric generator 34 is laterally moved, the carrier device 9 supports the electric generator 34. Depending on a structure of the electric generator 34 or a form of the movement, a central axis 18 of the electric generator which corresponds to the center of gravity of the electric generator 34 may shift from a central axis 19 of the carrier device which corresponds to the center position (load-receiving center) of the carrier device 9. In such an instance, an uneven load may be applied to the carrier device 9 and the intended performance might not be achieved.

Accordingly, it is effective to approximate the central axis 19 of the carrier device to the central axis 18 of the electric generator by adjusting the axial position of the carrier device 9; however, dimensional constraints on the carrier device 9, the electric generator 34, or the foundation may not allow a sufficient adjustment. To deal with this, it is possible to adjust the position of the central axis 18 of the electric generator by disassembling part of the components of the electric generator 34 to reduce the load before operating the carrier device 9, but as another method, it is also possible to add a necessary counter weight 20 to the electric generator as shown in FIG. 15 to approximate the central axis 18 of the electric generator to the central axis 19 of the carrier device and equally distribute the load onto the carrier device.

According to this modification example, when the center of gravity of the electric generator 34 and the load-receiving center of the carrier device 9 are deviated beyond a tolerable value, the central axis 18 of the electric generator and the central axis 19 of the carrier device can be approximated to each other by adjusting the center of gravity of the electric generator 34 through the addition of the counter weight 20 to one end of the electric generator 34 or disassembly of part of the structure of the electric generator before the carriage operation. Therefore, the load on the carrier device 9 can be evenly distributed.

### [Modification example 4]

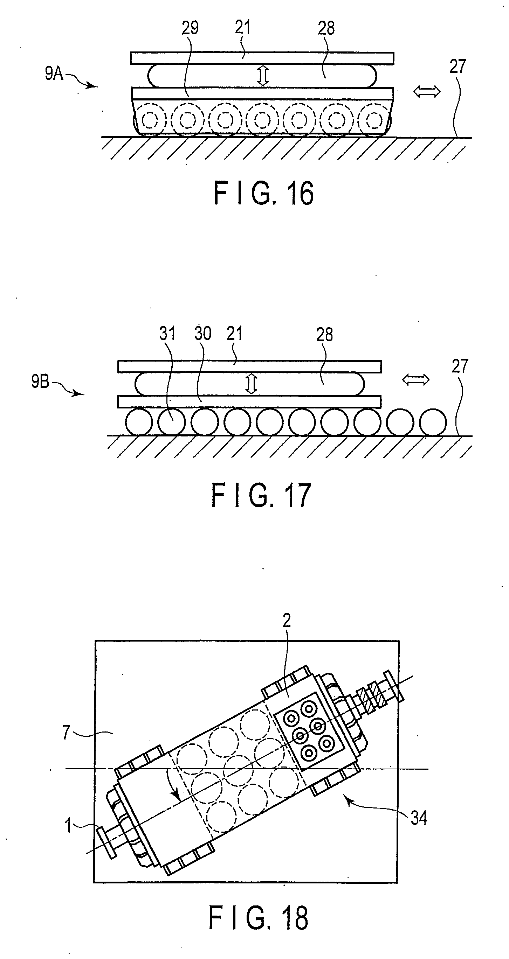

Next, a modification example 4 of the above embodiment will be described with reference to FIG. 16 and FIG. 17.

FIG. 16 is a side view showing a modification example of the carrier device 9 (carrier device of the combination of an air-pressure or water-pressure or oil-pressure lift-up mechanism and a dolly with rollers). Also, FIG. 17 is a side view showing a modification example of the carrier device 9 (carrier device of the combination of an air-pressure or water-pressure or oil-pressure lift-up mechanism and rollers).

As a carrier device for conducting maintenance operations, a carrier device 9A having an air-pressure or water-pressure or oil-pressure jack 28, and having a dolly 29 with rollers on which the jack 28 is mounted as shown in FIG. 16, or a carrier device 9B having rollers 31 on which jack 28 and a jack seating 30 for attachment of the jack 28 are also mounted as shown in FIG. 17 may be adopted, as well as the carrier device 9 using the air float-type carriers 22 as shown in FIG. 8 for the above first embodiment.

As described above, the air float-type carriers 22 cause the device to float due to a thin film of air, producing a very small frictional resistance during the lateral movement and providing the advantages of simplifying the drive mechanism and changeover for the lateral movement, and reducing the dimensions in the height direction as compared to other modes. However, the air float-type carriers 22 allow a relatively small load capacity. On the other hand, while the dimension in the height direction is increased, the modes to use a jack as shown in FIG. 16 and FIG. 17 can increase the load capacity by adopting, in particular, a pressure medium using water pressure or oil pressure.

### [Modification example 5]

Next, a modification example 5 of the above embodiment will be described with reference to FIG. 18.

FIG. 18 is a top view showing the modification example of the maintenance operations for the electric generator 34.

The above embodiment shows an example in which maintenance and inspection are conducted upon moving the electric generator 34 by the carrier device 9 in the lateral direction over the floor face 7 of the foundation pedestal as shown in FIG. 9. The maintenance and inspection for the electric generator 34 may be conducted not only upon the lateral movement, but also upon horizontal rotation as shown in FIG. 18 whereby the rotor 1 is pulled out and the rotor 1 and the stator 2 are subjected to internal inspection.

Note that the steps for the maintenance operations for the electric generator 34 in this modification example are the same as the steps in the above embodiment except the step to horizontally rotate the electric generator 34.

According to this modification example, the method of horizontally rotating the electric generator 34 can reduce the movement range of the electric generator 34. Therefore, the required sizes of the foundation pedestal and the floor face 7 of the foundation pedestal can also be reduced, contributing to the reduction in basic costs during the construction.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made. The accompanying claims and their equivalents are intended to cover such forms or modifications as would fall within the scope of the inventions.

## Claims

1. A maintenance method for an electric generator (34) applied to a power plant in which both axial ends of the electric generator (34) are connected to respective rotary machines, the maintenance method comprising the following steps:
providing the electric generator (34) with leg plates (4) for placing the electric generator (34) on a floor face (7) of a foundation pedestal (6), forming a bottom portion of the electric generator (34) to have a bottom plane (5) capable of supporting a weight of the electric generator (34), and forming a gap (8) between the bottom plane (5) of the electric generator (34) and an opposing floor face (7) of the foundation pedestal (6) such that a carrier device (9) capable of lifting up and horizontally moving the electric generator (34) can be inserted into the gap (8) while the electric generator (34) is placed on the floor face (7) of the foundation pedestal (6) via the leg plates (4); and
providing the carrier device (9) in the gap (8), and lifting up and horizontally moving the electric generator (34) by the carrier device (9), and thereafter doing maintenance of the electric generator (34) .

2. The maintenance method according to claim 1, wherein part or whole of the gap (8) is formed by forming the bottom plane (5) of the electric generator (34) to be higher than a bottom face of the leg plates (4) .

3. The maintenance method according to claim 1, wherein part or whole of the gap (8) is formed by forming the floor face (7) of the foundation pedestal (6) which faces the bottom plane (5) of the electric generator (34) to be lower than the floor face (7) of the foundation pedestal (6) where the leg plates (4) are disposed.

4. The maintenance method according to claim 3, further comprising forming a groove (16) at the floor face (7) of the foundation pedestal (6) which faces the bottom plane (5) of the electric generator (34), the groove having a width equal to or greater than a width of the carrier device (9) in the axial direction of the electric generator (34).

5. The maintenance method according to claim 1, further comprising forming the electric generator (34) not to have a structure which interferes with the foundation pedestal (6) during the horizontal movement of the electric generator (34), or forming the electric generator (34) to have a component which interferes with the foundation pedestal (6) to be in an easily detachable structure.

6. The maintenance method according to claim 1, further comprising forming the foundation pedestal (6) not to have a structure which interferes with the electric generator (34) during the horizontal movement of the electric generator (34), or forming the foundation pedestal (6) to have a component which interferes with the electric generator (34) to be in an easily detachable structure.

7. The maintenance method according to claim 1, further comprising providing a load-receiving extension rack (17) to a side face of the electric generator (34), the load-receiving extension rack (17) extending an area of the bottom plane (5) of the electric generator (34) in an axially perpendicular direction of the electric generator (34).

8. The maintenance method according to claim 1, further comprising: an axis disconnection step to disconnect the rotary machines at the respective axial ends of the electric generator (34); a foundation disconnection step to disconnect the leg plates (4) from the foundation pedestal (6) for the electric generator (34); a disassembly step to disassemble, on a side of the electric generator (34) and a side of the foundation pedestal (6), structural elements which cause interference between the electric generator (34) and the foundation pedestal (6) during the horizontal movement of the electric generator (34); a carrier device (9) insertion step to insert the carrier device (9) into the gap (8); a carriage step to lift up the electric generator (34) by actuation of the carrier device (9) and horizontally move the electric generator (34) over the floor face (7) of the foundation pedestal (6) to a predetermined position; and an electric generator (34) placement step to place the electric generator (34) at the predetermined position on the foundation pedestal (6) via the leg plates (4).

9. The maintenance method according to claim 1, further comprising forming the carrier device (9) to have an air-float type carrier (22) capable of using air pressure to carry an item via an air film, and have a caster (26) to rest upon during non-actuation of air pressure.

10. The maintenance method according to claim 1, further comprising forming the carrier device (9) to have an air-pressure or water-pressure or oil-pressure jack (28), and have a dolly (29) with rollers on which the jack (28) is mounted.

11. The maintenance method according to claim 1, further comprising forming the carrier device (9) to have an air-pressure or water-pressure or oil-pressure jack (28), and have rollers (31) arranged under a seating (30) for attachment of the jack (28).

12. The maintenance method according to claim 1, further comprising providing a movement guide (14) or a stopper to limit a movement range of the carrier device (9) during the horizontal movement of the electric generator (34) by the carrier device (9).

13. The maintenance method according to claim 1, further comprising returning the electric generator (34) to an original position by performing the respective steps in a reverse manner after maintenance of the electric generator (34), and adjusting alignment of the electric generator (34) to the rotary machines at the respective axial ends using an uplift function of the carrier device (9).

14. The maintenance method according to claim 8, further comprising adding a counter weight to one end of the electric generator (34) or disassembling part of the electric generator (34) before the movement of the electric generator (34) by the carrier device (9), so as to reduce a shift between a center of gravity of the electric generator (34) and a load-receiving center of the carrier device (9).

15. An electric generator (34) for a power plant in which both axial ends of the electric generator (34) are connected to respective rotary machines, the electric generator (34) comprising:
leg plates (4) for placing the electric generator (34) on a floor face (7) of a foundation pedestal (6) and
a bottom plane (5) capable of supporting a weight of the electric generator (34) at a bottom portion;
wherein a gap (8) is formed between the bottom plane (5) of the electric generator (34) and an opposing floor face (7) of the foundation pedestal (6) such that a carrier device (9) capable of lifting up and horizontally moving the electric generator (34) can be inserted into the gap (8) while the electric generator (34) is placed on the floor face (7) of the foundation pedestal (6) via the leg plates (4).

16. The electric generator (34) according to claim 15, wherein part or whole of the gap (8) is formed by forming the bottom plane (5) of the electric generator (34) to be higher than a bottom face of the leg plates (4).

17. The electric generator (34) according to claim 15, wherein a structure to interfere with the foundation pedestal (6) is absent during the horizontal movement of the electric generator (34), or a component which interferes with the foundation pedestal (6) is formed to be in an easily detachable structure.

18. The electric generator (34) according to claim 15, further comprising a load-receiving extension rack (17) to extend an area of the bottom plane (5) of the electric generator (34) in an axially perpendicular direction of the electric generator (34).

19. A foundation pedestal (6) for a power plant electric generator in which both axial ends of the electric generator (34) are connected to respective rotary machines, the foundation pedestal (6) comprising: a floor face (7) for placing the electric generator (34),
wherein a gap (8) is formed between a bottom plane (5) of the electric generator (34) and the floor face (7) of the foundation pedestal (6) which faces the bottom plane (5) of the electric generator (34) such that a carrier device (9) capable of lifting up and horizontally moving the electric generator (34) can be inserted into the gap (8) while the electric generator (34) is placed on the floor face (7) of the foundation pedestal (6) via leg plates (4).

20. The foundation pedestal (6) according to claim 19, wherein part or whole of the gap (8) is formed by forming the floor face (7) of the foundation pedestal (6) which faces the bottom plane (5) of the electric generator (34) to be lower than the floor face (7) of the foundation pedestal (6) where the leg plates (4) are disposed.

21. The foundation pedestal (6) according to claim 19, wherein a groove (16) is formed at the floor face (7) of the foundation pedestal (6) which faces the bottom plane (5) of the electric generator (34), the groove having a width equal to or greater than a width of the carrier device (9) in a horizontal direction in which the electric generator (34) moves.

22. The foundation pedestal (6) according to claim 19, wherein a structure which interferes with the electric generator (34) is absent during the horizontal movement of the electric generator (34), or a component which interferes with the electric generator (34) is formed to be in an easily detachable structure.

## Patentansprüche

1. Wartungsverfahren für einen elektrischen Generator (34), das auf ein Kraftwerk angewendet wird, in dem beide axiale Enden des elektrischen Generators (34) mit jeweiligen Drehmaschinen verbunden sind,
wobei das Wartungsverfahren die folgenden Schritte umfasst:
Versehen des elektrischen Generators (34) mit Beinplatten (4) zum Platzieren des elektrischen Generators (34) auf einer Bodenfläche (7) eines Fundamentsockels (6), Bilden eines unteren Abschnitts des elektrischen Generators (34) derart, dass er eine untere Ebene (5) aufweist, die in der Lage ist, ein Gewicht des elektrischen Generators (34) zu tragen, und Bilden eines Spalts (8) zwischen der unteren Ebene (5) des elektrischen Generators (34) und einer gegenüberliegenden Bodenfläche (7) des Fundamentsockels (6), derart, dass eine Trägervorrichtung (9), die in der Lage ist, den elektrischen Generator (34) anzuheben und horizontal zu bewegen, in den Spalt (8) eingeführt werden kann, während der elektrische Generator (34) via die Beinplatten (4) auf der Bodenfläche (7) des Fundamentsockels (6) platziert wird; und
Bereitstellen der Trägervorrichtung (9) im Spalt (8) und Anheben und horizontales Bewegen des elektrischen Generators (34) durch die Trägervorrichtung (9) und danach Ausführen einer Wartung am elektrischen Generator (34).

2. Wartungsverfahren nach Anspruch 1, wobei ein Teil oder ein Ganzes des Spalts (8) durch Bilden der unteren Ebene (5) des elektrischen Generators (34) derart gebildet ist, dass sie höher ist als eine untere Fläche der Beinplatten (4).

3. Wartungsverfahren nach Anspruch 1, wobei ein Teil oder ein Ganzes des Spalts (8) durch Bilden der Bodenfläche (7) des Fundamentsockels (6), die der unteren Ebene (5) des elektrischen Generators (34) zugewandt ist, derart gebildet ist, dass sie niedriger ist als die Bodenfläche (7) des Fundamentsockels (6), wo die Beinplatten (4) angeordnet sind.

4. Wartungsverfahren nach Anspruch 3, das ferner das Bilden einer Nut (16) in der Bodenfläche (7) des Fundamentsockels (6), die der unteren Ebene (5) des elektrischen Generators (34) zugewandt ist, umfasst, wobei die Nut eine Breite aufweist, die einer Breite der Trägervorrichtung (9) in der Axialrichtung des elektrischen Generators (34) gleich oder größer ist als diese.

5. Wartungsverfahren nach Anspruch 1, das ferner das Bilden des elektrischen Generators (34) derart, dass er keine Struktur aufweist, die während der horizontalen Bewegung des elektrischen Generators (34) in den Fundamentsockel (6) eingreift, oder das Bilden des elektrischen Generators (34) derart, dass er eine Komponente aufweist, die in den Fundamentsockel (6) eingreift, um in einer einfach lösbaren Struktur zu sein, umfasst.

6. Wartungsverfahren nach Anspruch 1, das ferner das Bilden des Fundamentsockels (6) derart, dass er keine Struktur aufweist, die während der horizontalen Bewegung des elektrischen Generators (34) in den elektrischen Generator (34) eingreift, oder das Bilden des Fundamentsockels (6) derart, dass er eine Komponente aufweist, die in den elektrischen Generator (34) eingreift, um in einer einfach lösbaren Struktur zu sein, umfasst.

7. Wartungsverfahren nach Anspruch 1, das ferner das Bereitstellen eines Lastaufhahmeverlängerungsgestells (17) an einer Seitenfläche des elektrischen Generators (34) umfasst, wobei das Lastaufhahmeverlängerungsgestell (17) einen Bereich der unteren Ebene (5) des elektrischen Generators (34) in eine axial senkrechte Richtung des elektrischen Generators (34) verlängert.

8. Wartungsverfahren nach Anspruch 1, das ferner Folgendes umfasst: einen Achsentrennschritt zum Trennen der Drehmaschinen an den jeweiligen axialen Enden des elektrischen Generators (34); einen Fundamenttrennschritt zum Trennen der Beinplatten (4) vom Fundamentsockel (6) für den elektrischen Generator (34); einen Demontageschritt zum Demontieren von Strukturelementen auf einer Seite des elektrischen Generators (34) und einer Seite des Fundamentsockels (6), die während der horizontalen Bewegung des elektrischen Generators (34) ein Eingreifen zwischen dem elektrischen Generator (34) und dem Fundamentsockel (6) bewirken; einen Einführungsschritt für die Trägervorrichtung (9) zum Einführen der Trägervorrichtung (9) in den Spalt (8); einen Wagenschritt zum Anheben des elektrischen Generators (34) durch Betätigen der Trägervorrichtung (9) und zum horizontalen Bewegen des elektrischen Generators (34) über die Bodenfläche (7) des Fundamentsockels (6) in eine vorbestimmte Position und einen Platzierungsschritt für den elektrischen Generator (34) zum Platzieren des elektrischen Generators (34) via die Beinplatten (4) in der vorbestimmten Position auf dem Fundamentsockel (6).

9. Wartungsverfahren nach Anspruch 1, das ferner das Bilden der Trägervorrichtung (9) derart, dass er einen Träger (22) eines in der Luft schwebenden Typs aufweist, der Druckluft verwenden kann, um ein Objekt via einen Luftfilm zu tragen, und eine Laufrolle (26) aufweist, um während der Nichtbetätigung der Druckluft darauf zu ruhen, umfasst.

10. Wartungsverfahren nach Anspruch 1, das ferner das Bilden der Trägervorrichtung (9) derart, dass er einen Luftdruck- oder Wasserdruck- oder Öldruckheber (28) und einen Rollwagen (29) mit Rollen, auf dem der Heber (28) montiert ist, aufweist, umfasst.

11. Wartungsverfahren nach Anspruch 1, das ferner das Bilden der Trägervorrichtung (9) derart, dass er einen Luftdruck- oder Wasserdruck- oder Öldruckheber (28) und Rollen (31), die unter einem Sitz (30) angeordnet sind, zur Befestigung des Hebers (28) aufweist, umfasst.

12. Wartungsverfahren nach Anspruch 1, das ferner das Bereitstellen einer Bewegungsführung (14) oder eines Anschlags zum Begrenzen einer Bewegungsspanne der Trägervorrichtung (9) während der horizontalen Bewegung des elektrischen Generators (34) durch die Trägervorrichtung (9) umfasst.

13. Wartungsverfahren nach Anspruch 1, das ferner das Rückführen des elektrischen Generators (34) in eine Originalposition durch Durchführen der jeweiligen Schritte in einer umgekehrten Weise nach der Wartung des elektrischen Generators (34) und das Anpassen der Ausrichtung des elektrischen Generators (34) auf die Drehmaschinen an den jeweiligen axialen Enden unter Verwendung einer Anhebefunktion der Trägervorrichtung (9) umfasst.

14. Wartungsverfahren nach Anspruch 8, das ferner das Hinzufügen eines Gegengewichts an einem Ende des elektrischen Generators (34) oder das Demontieren eines Teils des elektrischen Generators (34) vor der Bewegung des elektrischen Generators (34) durch die Trägervorrichtung (9), um ein Verschieben zwischen einem Schwerpunkt des elektrischen Generators (34) und eines Lastaufhahmezentrums der Trägervorrichtung (9) zu reduzieren, umfasst.

15. Elektrischer Generator (34) für ein Kraftwerk, in dem beide axiale Enden des elektrischen Generators (34) mit jeweiligen Drehmaschinen verbunden sind, wobei der elektrische Generator (34) Folgendes umfasst:
Beinplatten (4) zum Platzieren des elektrischen Generators (34) auf einer Bodenfläche (7) eines Fundamentsockels (6) und eine untere Ebene (5), die in der Lage ist, ein Gewicht des elektrischen Generators (34) in einem unteren Abschnitt zu tragen;
wobei ein Spalt (8) zwischen der unteren Ebene (5) des elektrischen Generators (34) und einer gegenüberliegenden Bodenfläche (7) des Fundamentsockels (6), derart gebildet ist, dass eine Trägervorrichtung (9), die in der Lage ist, den elektrischen Generator (34) anzuheben und horizontal zu bewegen, in den Spalt (8) eingeführt werden kann, während der elektrische Generator (34) via die Beinplatten (4) auf der Bodenfläche (7) des Fundamentsockels (6) platziert wird.

16. Elektrischer Generator (34) nach Anspruch 15, wobei ein Teil oder ein Ganzes des Spalts (8) durch Bilden der unteren Ebene (5) des elektrischen Generators (34) derart, dass sie höher ist als eine untere Fläche der Beinplatten (4), gebildet wird.

17. Elektrischer Generator (34) nach Anspruch 15, wobei eine Struktur zum Eingreifen in den Fundamentsockel (6) während der horizontalen Bewegung des elektrischen Generators (34) fehlt oder eine Komponente, die in den Fundamentsockel (6) eingreift, derart gebildet ist, dass sie in einer einfach lösbaren Struktur ist.

18. Elektrischer Generator (34) nach Anspruch 15, der ferner ein Lastaufhahmeverlängerungsgestell (17) zum Verlängern eines Bereichs der unteren Ebene (5) des elektrischen Generators (34) in eine axial senkrechte Richtung des elektrischen Generators (34) umfasst.

19. Fundamentsockel (6) für einen elektrischen Kraftwerksgenerator, in dem beide axiale Enden des elektrischen Generators (34) mit jeweiligen Drehmaschinen verbunden sind, wobei der Fundamentsockel (6) Folgendes umfasst:
eine Bodenfläche (7) zum Platzieren des elektrischen Generators (34), wobei ein Spalt (8) zwischen einer unteren Ebene (5) des elektrischen Generators (34) und der Bodenfläche (7) des Fundamentsockels (6), die der unteren Ebene (5) des elektrischen Generators (34) zugewandt ist, derart gebildet ist, dass eine Trägervorrichtung (9), die in der Lage ist, den elektrischen Generator (34) anzuheben und horizontal zu bewegen, in den Spalt (8) eingeführt werden kann, während der elektrische Generator (34) via Beinplatten (4) auf der Bodenfläche (7) des Fundamentsockels (6) platziert wird.

20. Fundamentsockel (6) nach Anspruch 19, wobei ein Teil oder ein Ganzes des Spalts (8) durch Bilden der Bodenfläche (7) des Fundamentsockels (6), die der unteren Ebene (5) des elektrischen Generators (34) zugewandt ist, derart gebildet ist, dass sie niedriger ist als die Bodenfläche (7) des Fundamentsockels (6), wo die Beinplatten (4) angeordnet sind.

21. Fundamentsockel (6) nach Anspruch 19, wobei eine Nut (16) in der Bodenfläche (7) des Fundamentsockels (6), die der unteren Ebene (5) des elektrischen Generators (34) zugewandt ist, gebildet ist, wobei die Nut eine Breite aufweist, die einer Breite der Trägervorrichtung (9) in einer horizontalen Richtung, in die sich der elektrische Generator (34) bewegt, gleich oder größer ist als diese.

22. Fundamentsockel (6) nach Anspruch 19, wobei eine Struktur, die in den elektrischen Generator (34) eingreift, während der horizontalen Bewegung des elektrischen Generators (34) fehlt oder eine Komponente, die in den elektrischen Generator (34) eingreift, derart gebildet ist, dass sie in einer einfach lösbaren Struktur ist.

## Revendications

1. Procédé de maintenance pour un générateur électrique (34) appliqué à une centrale électrique dans lequel les deux extrémités axiales du générateur électrique (34) sont raccordées à des machines rotatives respectives,
le procédé de maintenance comprenant les étapes suivantes :
équiper le générateur électrique (34) avec des plaques jambières (4) afin de placer le générateur électrique (34) sur une face de sol (7) d'un socle de fondation (6), former une partie inférieure du générateur électrique (34) de façon à obtenir un plan inférieur (5) capable de supporter un poids du générateur électrique (34), et former un intervalle (8) entre le plan inférieur (5) du générateur électrique (34) et une face de sol opposée (7) du socle de fondation (6), de sorte qu'un dispositif de support (9) capable de lever et de déplacer de manière horizontale le générateur électrique (34) puisse être inséré dans l'intervalle (8) tandis que le générateur électrique (34) est placé sur la face de sol (7) du socle de fondation (6) via les plaques jambières (4) ; et
disposer le dispositif de support (9) dans l'intervalle (8), et lever et déplacer horizontalement le générateur électrique (34) par le dispositif de support (9) suivi de la réalisation de la maintenance du générateur électrique (34).

2. Procédé de maintenance selon la revendication 1, dans lequel tout ou partie de l'intervalle (8) est formé en réalisant le plan inférieur (5) du générateur électrique (34) de sorte qu'il soit plus haut qu'une face inférieure des plaques jambières (4).

3. Procédé de maintenance selon la revendication 1, dans lequel tout ou partie de l'intervalle (8) est formé en réalisant la face de sol (7) du socle de fondation (6) qui fait face au plan inférieur (5) du générateur électrique (34) de sorte qu'elle soit plus basse que la face de sol (7) du socle de fondation (6) où les plaques jambières (4) sont situées.

4. Procédé de maintenance selon la revendication 3, comprenant en outre la formation d'une cannelure (16) au niveau de la face de sol (7) du socle de fondation (6) qui fait face au plan inférieur (5) du générateur électrique (34), la cannelure présentant une largeur égale ou supérieure à une largeur du dispositif de support (9) dans la direction axiale du générateur électrique (34).

5. Procédé de maintenance selon la revendication 1, comprenant en outre la formation du générateur électrique (34) de façon à ne pas avoir de structure qui interfère avec le socle de fondation (6) pendant le mouvement horizontal du générateur électrique (34) ou la formation du générateur électrique (34) de façon à ce qu'un composant qui interfère avec le socle de fondation (6) se trouve dans une structure facilement détachable.

6. Procédé de maintenance selon la revendication 1, comprenant en outre la formation du socle de fondation (6) de sorte qu'il n'y ait pas de structure qui interfère avec le générateur électrique (34) pendant le mouvement horizontal du générateur électrique (34), ou la formation du socle de fondation (6) de façon à ce qu'un composant qui interfère avec le générateur électrique (34) se trouve dans une structure facilement détachable.

7. Procédé de maintenance selon la revendication 1, comprenant en outre la fourniture d'un rack d'extension de réception de charge (17) vers une face latérale du générateur électrique (34), le rack d'extension de réception de charge (17) étendant une zone du plan inférieur (5) du générateur électrique (34) dans une direction axialement perpendiculaire du générateur électrique (34).

8. Procédé de maintenance selon la revendication 1, comprenant en outre : une étape de déconnexion de l'axe permettant de débrancher les machines rotatives aux extrémités axiales respectives du générateur électrique (34) ; une étape de déconnexion de la fondation permettant de débrancher les plaques jambières (4) du socle de fondation (6) pour le générateur électrique (34) ; une étape de démontage permettant de démonter, sur un côté du générateur électrique (34) et un côté du socle de fondation (6), des éléments structurels qui provoquent une interférence entre le générateur électrique (34) et le socle de fondation (6) pendant le mouvement horizontal du générateur électrique (34) ; une étape d'insertion d'un dispositif de support (9) permettant d'insérer le dispositif de support (9) dans l'intervalle (8) ; une étape de support permettant de lever le générateur électrique (34) par l'actionnement du dispositif de support (9) et le déplacement horizontal du générateur électrique (34) sur la face de sol (7) du socle de fondation (6) vers une position prédéterminée ; et une étape de mise en place du générateur électrique (34) permettant de placer le générateur électrique (34) dans la position prédéterminée sur le socle de fondation (6) via les plaques jambières (4).

9. Procédé de maintenance selon la revendication 1, comprenant en outre la formation du dispositif de support (9) afin d'avoir un support de type à coussin d'air (22) capable d'utiliser une pression d'air permettant de transporter un élément via un film d'air, et avoir une roulette (26) sur laquelle s'appuyer pendant l'absence d'actionnement d'une pression d'air.

10. Procédé de maintenance selon la revendication 1, comprenant en outre la formation du dispositif de support (9) de façon à avoir un vérin à pression pneumatique ou à pression hydraulique ou à pression d'huile (28), et à avoir un chariot (29) présentant des rouleaux sur lesquels le vérin (28) est monté.

11. Procédé de maintenance selon la revendication 1, comprenant en outre la formation du dispositif de support (9) de façon à avoir un vérin à pression pneumatique ou à pression hydraulique ou à pression d'huile (28), et à avoir des rouleaux (31) agencés sous un logement (30) pour la fixation du vérin (28).

12. Procédé de maintenance selon la revendication 1, comprenant en outre la fourniture d'un guide de mouvement (14) ou une butée afin de limiter une plage de mouvement du dispositif de support (9) pendant le mouvement horizontal du générateur électrique (34) par le dispositif de support (9).

13. Procédé de maintenance selon la revendication 1, comprenant en outre le retour du générateur électrique (34) dans une position originale en réalisant les étapes respectives dans le sens inverse après la maintenance du générateur électrique (34), et en ajustant l'alignement du générateur électrique (34) aux machines rotatives aux extrémités axiales respectives, en utilisant une fonction de soulèvement du dispositif de support (9).

14. Procédé de maintenance selon la revendication 8, comprenant en outre l'ajout d'un contrepoids à une extrémité du générateur électrique (34) ou le démontage d'une partie du générateur électrique (34) avant le mouvement du générateur électrique (34) par le dispositif de support (9), de façon à réduire un changement entre un centre de gravité du générateur électrique (34) et un centre recevant la charge du dispositif de support (9).

15. Générateur électrique (34) pour une centrale électrique, dans lequel les deux extrémités axiales du générateur électrique (34) sont raccordées à des machines rotatives respectives, le générateur électrique (34) comprenant :
des plaques jambières (4) permettant de placer le générateur électrique (34) sur une face de sol (7) d'un socle de fondation (6) et un plan inférieur (5) capable de supporter un poids du générateur électrique (34) dans une partie inférieure ;
dans lequel un intervalle (8) est formé entre le plan inférieur (5) du générateur électrique (34) et une face de sol opposée (7) du socle de fondation (6) de sorte qu'un dispositif de support (9) capable de lever et de déplacer de manière horizontale le générateur électrique (34) puisse être inséré dans l'intervalle (8) tandis que le générateur électrique (34) est placé sur la face de sol (7) du socle de fondation (6) via les plaques jambières (4).

16. Générateur électrique (34) selon la revendication 15, dans lequel tout ou partie de l'intervalle (8) est formé en réalisant le plan inférieur (5) du générateur électrique (34) de sorte qu'il soit plus haut qu'une face inférieure des plaques jambières (4).

17. Générateur électrique (34) selon la revendication 15, dans lequel une structure permettant d'interférer avec le socle de fondation (6) est absente pendant le mouvement horizontal du générateur électrique (34), ou un composant qui interfère avec le socle de fondation (6) est formé de façon à être situé dans une structure facilement détachable.

18. Générateur électrique (34) selon la revendication 15, comprenant en outre un rack d'extension de réception de charge (17) afin d'étendre une zone du plan inférieur (5) du générateur électrique (34) dans une direction axialement perpendiculaire du générateur électrique (34).

19. Socle de fondation (6) pour un générateur électrique de centrale électrique, dans lequel les deux extrémités axiales du générateur électrique (34) sont raccordées à des machines rotatives respectives, le socle de fondation (6) comprenant :
une face de sol (7) afin de placer le générateur électrique (34), dans laquelle un intervalle (8) est formé entre un plan inférieur (5) du générateur électrique (34) et la face de sol (7) du socle de fondation (6) qui fait face au plan inférieur (5) du générateur électrique (34) de sorte qu'un dispositif de support (9) capable de lever et de déplacer de manière horizontale le générateur électrique (34) puisse être inséré dans l'intervalle (8) tandis que le générateur électrique (34) est placé sur la face de sol (7) du socle de fondation (6) via des plaques jambières (4).

20. Socle de fondation (6) selon la revendication 19, dans lequel tout ou partie de l'intervalle (8) est formé en réalisant la face de sol (7) du socle de fondation (6) qui fait face au plan inférieur (5) du générateur électrique (34) de sorte qu'elle soit plus basse que la face de sol (7) du socle de fondation (6) où les plaques jambières (4) sont disposées.

21. Socle de fondation (6) selon la revendication 19, dans lequel une cannelure (16) est formée sur la face de sol (7) du socle de fondation (6) qui fait face au plan inférieur (5) du générateur électrique (34), la cannelure présentant une largeur égale ou supérieure à une largeur du dispositif de support (9) dans une direction horizontale dans laquelle le générateur électrique (34) se déplace.

22. Socle de fondation (6) selon la revendication 19, dans lequel une structure qui interfère avec le générateur électrique (34) est absente pendant le mouvement horizontal du générateur électrique (34) ou un composant qui interfère avec le générateur électrique (34) est formé de façon à se trouver dans une structure facilement détachable.
